(19) Europäisches Patentamt
European Patent Office
Office européen des brevets

(11) **EP 0 890 058 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(21) Anmeldenummer: 97915475.4

(22) Anmeldetag: **01.04.1997**

(51) Int Cl.⁷: **F16P 3/08**

(86) Internationale Anmeldenummer:
**PCT/EP97/01641**

(87) Internationale Veröffentlichungsnummer:
**WO 97/37168 (09.10.1997 Gazette 1997/43)**

(54) **SICHERHEITSSCHALTUNG**

PROTECTIVE CIRCUIT

CIRCUIT DE SECURITE

(84) Benannte Vertragsstaaten:
**CH DE FR GB IT LI**

(30) Priorität: **02.04.1996 DE 19613206**
**19.04.1996 DE 19615588**

(43) Veröffentlichungstag der Anmeldung:
**13.01.1999 Patentblatt 1999/02**

(73) Patentinhaber: **SCHNEIDER ELECTRIC GMBH**
**40880 Ratingen (DE)**

(72) Erfinder:
• **SCHMITZ, Frank**
**D-51427 Bergisch-Gladbach (DE)**
• **KLEES, Christoph**
**D-51674 Wiehl (DE)**

(74) Vertreter:
**Wanischeck-Bergmann, Axel, Dipl.-Ing. et al**
**Rondorfer Strasse 5a**
**50968 Köln (DE)**

(56) Entgegenhaltungen:
**EP-A- 0 105 054**

**Beschreibung**

Die Erfindung betrifft eine Sicherheitsschaltung zur Überwachung eines zwischen zwei Endstellungen bewegbaren Gegenstandes, beispielsweise einer verschiebbaren Sicherheitstür einer elektrischen Maschine.

Aus der Praxis und aus dem Stand der Technik sind derartige Sicherheitsschaltungen hinlänglich bekannt. Hierbei handelt es sich um solche Sicherheitsschaltungen, die die Bewegung eines Gegenstandes aus einer ersten Endlage in eine zweite Endlage durch Endschalterbetätigung überwachen. Beispielsweise werden mit derartigen Sicherheitsschaltungen Sicherheitstüren, -gitter oder dergleichen von elektrischen Maschinen, wie beispielsweise Pressen, Stanzvorrichtungen, Fräsmaschinen, Drehbänken oder Aufzügen überwacht. Hierbei soll sichergestellt werden, daß die voranstehend genannten Maschinen erst nach ordnungsgemäßem Schließen der Sicherheitstür oder dergleichen über entsprechende Schalteinrichtungen in Betrieb genommen werden können, um beispielsweise Verletzungsgefahren bei den Bedienpersonen auszuschließen. Üblicherweise dient zum Einschalten der Maschine in den jeweils gefährlichen Zustand eine Zweihandbetätigung, wodurch sichergestellt werden soll, daß die beiden Hände der bedienenden Person beschäftigt sind und jede Möglichkeit ausgeschlossen ist, etwa mit der einen oder anderen Hand in den Gefahr bringenden Raum einzugreifen. Gleichzeitig soll aber auch sichergestellt sein, daß die bedienende Person nicht mit anderen Körperteilen, wie beispielsweise den Beinen oder mit Kleidungsstücken in den Gefahr bringenden Raum gelangen kann. Es ist aber auch denkbar, daß derartige Maschinen über eine Einhandbetätigung eines Schalters, insbesondere eines Tasters betätigt werden, so daß gegebenenfalls die zweite Hand der bedienenden Person in den Gefahrenbereich gelangen kann. Aus diesem Grunde weisen derartige Maschinen Sicherheitstüren, -gitter, Lichtvorhänge oder dergleichen auf, die eine Bedienung der Maschine erst dann zulassen, wenn diese Bauteile entweder in der richtigen, geschlossenen Position angeordnet (Sicherheitstür oder -gitter) oder ordnungsgemäß eingeschaltet sind (Lichtvorhang). Bei diesen Sicherheitsschaltungen ist es notwendig, daß jegliche Manipulation an dem zu bewegenden Gegenstand bzw. den damit verbundenen Endschaltern und der Betätigungseinrichtung für die Maschine ausgeschlossen ist. Ferner wird angestrebt, daß die Sicherheitsschaltung fehlerfrei arbeitet, so daß nur dann ein Durchschalten an den Verbraucher, d. h. ein Einschalten des gefährlichen Betriebszustandes möglich ist, daß aber andererseits bei Auftreten irgendeines Fehlers innerhalb der Schaltung mit Sicherheit ein Durchschalten unterbunden wird. Die bisher bekannten elektrischen Sicherheitsschaltunge erfüllen entweder nicht alle Sicherheitskriterien oder sie sind derart kompliziert und bauaufwendig gestaltet, daß sie einen sehr hohen Kostenaufwand erfordern und auch gerade in der Kompliziertheit des Aufbaues ein Sicherheitsrisiko zu sehen ist.

Aus der EP-A-105 054 ist eine Sicherheitsschaltung zur Überwachung eines zwischen zwei Endstellungen bewegbaren Gegenstandes, beispielsweise einer verschiebbaren Sicherheitstür einer elektrischen Maschine, mit zumindest zwei Endschaltern bekannt, welche die Endposition des Gegenstandes überwachen.

Ausgehend von diesem Stand der Technik liegt der Erfindung die Aufgabe zugrunde, eine allgemein geeignete Sicherheitsschaltung zur Überwachung von zwischen zwei Endstellungen bewegbaren Gegenständen zu schaffen, die sehr einfach und übersichtlich gestaltet ist und die demzufolge kostengünstig herstellbar ist, dabei insbesondere nicht manipuliert werden kann und die Überwachung von dem Startbefehl unabhängig ausgebildet ist.

Zur Lösung dieser Aufgabe wird eine Sicherheitsschaltung mit den Merkmalen des Anspruches 1 vorgeschlagen.

Demzufolge besteht die Sicherheitsschaltung im wesentlichen aus zumindest zwei Endschaltern, welche die Endpositionen des Gegenstandes überwachen, zumindest einem Schalter zur Aktivierung eines ersten Reservoirs für ein erstes Ladungspotential und einem Oszillator, insbesondere einem Multivibrator, der an eine an sich bekannte Treiberbrücke angeschlossen ist, welche an einem Verbraucher, beispielsweise der elektrischen Maschine angeschlossen ist, wobei der Oszillator mit einem zweiten Reservoir für ein zweites Ladungspotential verbunden ist, welches den Oszillator über ein vorbestimmtes Zeitintervall aktiviert hält, wenn die Endschalter sich in Zustandsänderung befinden.

Bei einer erfindungsgemäßen Sicherheitsschaltung ist somit vorgesehen, daß der Oszillator Signale an die Treiberbrücke abgibt, welche unter bestimmten Bedingungen ein Durchschalten an den Verbraucher, d. h. die elektrische Maschine, ermöglicht. Hierzu ist der Oszillator an ein Reservoir für ein Ladungspotential angeschlossen, welches den Oszillator dann aktiv hält, wenn über ein bestimmtes Zeitintervall zumindest einer der beiden Endschalter nicht in seiner, das Durchschalten an den Verbraucher ermöglichenden Stellung steht. Diese Aktivphase des Oszillators ist zeitlich begrenzt, so daß bei Überschreiten des Zeitintervalls der Oszillator deaktiviert wird und kein Signal an die Treiberbrücke übermittelt. Ein Durchschalten an den Verbraucher, welches im übrigen noch von einem weiteren Schaltungskriterium abhängig ist, kann somit dann nicht erfolgen, wenn nicht zuvor beide Endschalter des zwischen zwei Endstellungen bewegbaren Gegenstandes die ein Durchschalten an den Verbraucher ermöglichende Position erreichen. In diesem Fall ist ein Durchschalten an den Verbraucher auch über den Schalter zur Aktivierung eines ersten Reservoirs für ein erstes Ladungspotential nicht möglich (Start). Dieses erste Ladungspotential ist als weiteres Signal für die Treiberbrücke notwendig, um das Durchschalten an den Verbraucher schaltungstechnisch zu bewerkstelligen. Somit müssen sowohl die Signale des Oszillators als auch Signale über das erste Ladungspotential an die Treiberbrücke übermittelt werden, um den Verbraucher, nämlich die Maschine in Betrieb zu nehmen. Hierbei ist von besonderer Bedeutung, daß ausschließlich die Signale des Oszillators zeitabhängig an die Treiberbrücke übermittelt werden müssen, d. h., daß der zwischen zwei Endstellungen bewegbare Gegenstand in einem bestimmten Zeitintervall aus seiner ersten, unsicheren Stellung in seine zweite, sichere Stellung überführt werden muß, so daß während dieses Zeitintervalls beide Endschalter betätigt werden und dem Oszillator signalisieren, daß der Gegenstand in seiner sicheren Stellung steht, bevor zeitunabhängig das erste Ladungspotential an die Treiberbrücke übertragen wird, so daß ein Durchschalten an den Verbraucher zeitlich von dem Startbefehl unabhängig ist. Demzufolge kann der Startbefehl über das erste Reservoir für das erste Ladungspotential auch verspätet an die Treiberbrücke übermittelt werden, wenn zuvor innerhalb des vorgegebenen Zeitintervalls der Oszillator aktiv gehalten wird und somit der Treiberbrücke die entsprechenden Signale übrmittelt werden.

Weitere Merkmale und Vorteile der erfindungsgemäßen Sicherheitsschaltung ergeben sich aus den Unteransprüchen.

Bei der erfindungsgemäßen Sicherheitsschaltung ist demnach ein Zeitkondensator vorgesehen, der in einer ersten Phase aufgeladen wird und seine Ladung dann abgibt, wenn zumindest ein Endschalter betätigt wird. Diese Ladung dient zur Aufrechterhaltung des aktiven Ozillators. Wird innerhalb des vorgegebenen Zeitintervalls, beispielsweise innerhalb von einer Synchronzeit von 1,5 Sekunden auch der zweite Endschalter derart betätigt, so daß für die Sicherheitsschaltung erkennbar ist, daß beispielsweise die Sicherheitstür in der vorgeschriebenen geschlossenen Stellung steht, so erhält der Oszillator das zu seiner Aktivhaltung notwendige Ladungspotential nicht mehr über den Zeitkondensator, sondern direkt über den Schaltkreislauf, der bei Betätigung des ersten Endschalters spannungslos geschaltet wird. Wird innerhalb der Synchronzeit der zweite Endschalter nicht in der voranstehend beschriebenen Weise betätigt, so entlädt sich der Zeitkondensator vollständig, so daß dem Oszillator nach Entladung des Zeitkondensators kein weiteres Ladungspotential zugeführt wird und der Oszillator deaktiviert wird, so daß weitere Signale an die Treiberbrücke nicht abgegeben werden.

Für den Fall, daß der als Multivibrator ausgebildete Oszillator innerhalb der Synchronzeit an die Spannung des Schaltkreislaufes angeschlossen wird, d. h. daß der zweite Endschalter ordnungsgemäß betätigt wird, ist es möglich und notwendig, über den Schalter zur Aktivierung des ersten Reservoirs für das erste Ladungspotential ein weiteres Signal an die Treiberbrücke zu senden, welches zusammen mit den Signalen aus dem Multivibrator das Durchschalten an den Verbraucher ermöglicht. Hierzu kann es erforderlich sein, daß externe Startbedingungen zuvor erfüllt sein müssen. Vorzugsweise besteht das Reservoir für das erste Ladungspotential aus einem Startkondensator, der bei Betätigung des Schalters geladen wird und sich beim Öffnen des Schalters über zumindest einen, vorzugsweise zwei als Leuchtdioden ausgebildete Optokoppler zur Treiberbrücke hin entlädt. Hierbei ist sowohl ein überwachter Start über ein Öffnen und Schließen des Schalters als auch ein nicht überwachter Start möglich, der lediglich durch ein Schließen des Schalters ausgelöst wird.

Weitere Vorteile und Merkmale der Erfindung ergeben sich aus der nachfolgenden Beschreibung der zugehörigen Zeichnung, in der ein bevorzugtes Ausführungsbeispiel dargestellt ist.

In der Zeichnung zeigen:

Figur 1 zwei Endschalter einer Sicherheitsschaltung in Verbindung mit einem Sicherheitsgitter in geschlossenem Zustand;

Figur 2 die Endschalter gemäß Figur 1 bei geöffnetem Sicherheitgitter;

Figur 3 eine Sicherheitsschaltung in Form eines Prinzipschaltplanes und

Figur 4 ein Schaltbild zum Anschluß der Endschalter gemäß den Figuren 1 und 2.

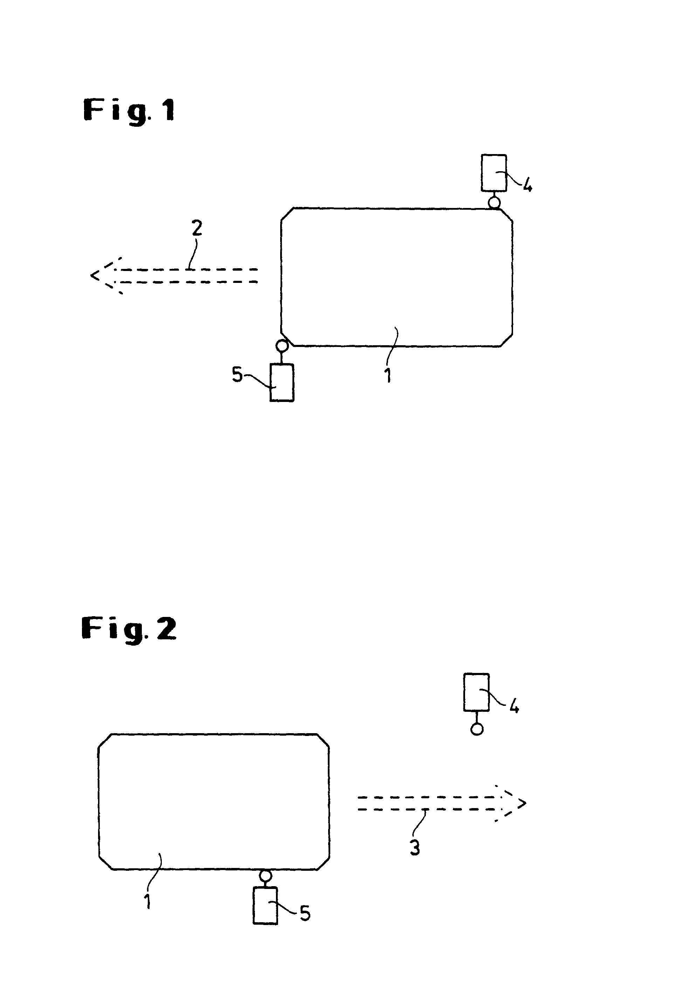

In den Figuren 1 und 2 ist ein Sicherheitsgitter 1 dargestellt, welches sich in Figur 1 in seiner geschlossenen Stellung und in Figur 2 in seiner geöffneten Stellung befindet, wobei das Sicherheitsgitter in Figur 1 in Richtung des Pfeiles 2 in die in Figur 2 geöffnete Stellung und in Richtung des Pfeiles 3 in Figur 2 in die in Figur 1 dargestellte geschlossene Stellung überführt werden kann. An gegenüberliegenden Längskanten des Sicherheitsgitters 1 sind zwei Endschalter 4 und 5 ortsfest montiert, die über die Längskanten des Sicherheitsgitters 1 wechselseitig angesteuert werden. Bei der in Figur 1 dargestellten geschlossenen Stellung des Sicherheitsgitters 1 befindet sich der Endschalter 4 in einer geschalteten Stellung und der Endschalter 5 in einer nicht geschalteten Stellung. In Figur 2, welche die geöffnete Stellung des Sicherheitsgitters 1 zeigt, befindet sich der Endschalter 4 in einer nicht geschalteten Stellung und der Endschalter 5 in einer geschalteten Stellung.

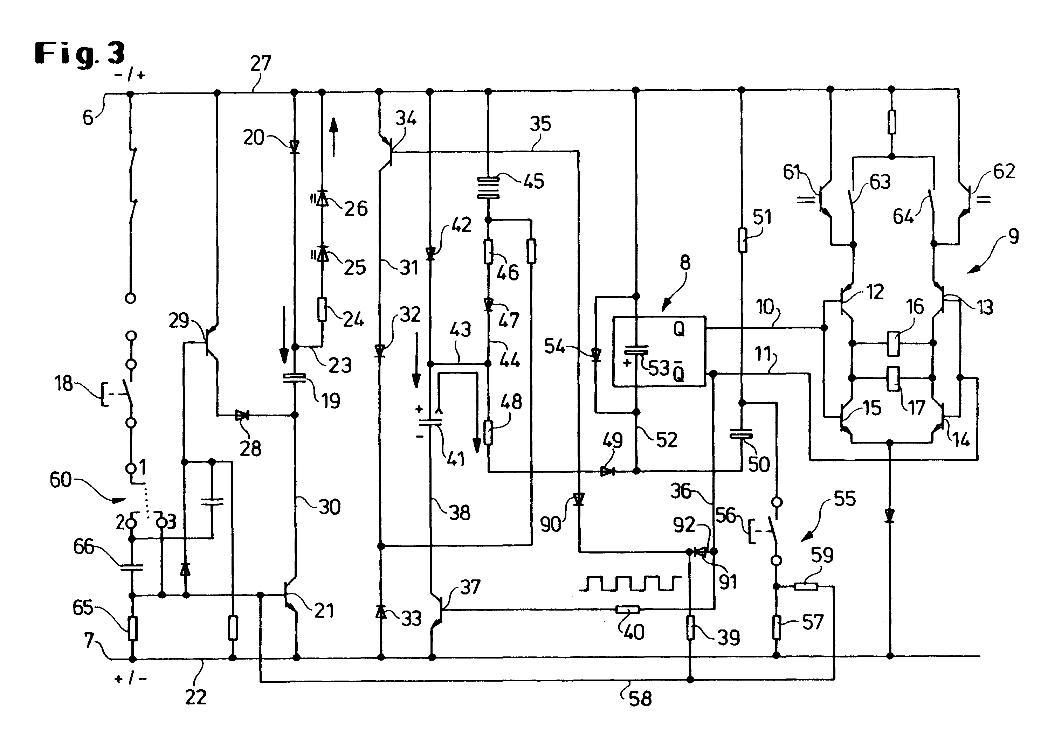

Zur Überwachung dieser beiden Endschalter 4 und 5 ist eine Sicherheitsschaltung vorgesehen, wie sie in der Figur 3 dargestellt ist. Diese Sicherheitsschaltung soll gewährleisten, daß ein elektrischer Verbraucher, nämlich eine elektrische Maschine, wie beispielsweise eine Presse, Stanzvorrichtung, Fräsmaschine, Drehbank od. dgl. erst dann eingeschaltet werden kann, wenn das Sicherheitsgitter 1 seine in Figur 1 dargestellte geschlossene Stellung eingenommen hat, demzufolge der Endschalter 4 sich in seiner geschalteten und der Endschalter 5 in seiner nicht geschalteten Stellung befinden.

Zu diesem Zweck ist der Endschalter 4 mit einem Schalter 7 und der Endschalter 5 mit einem Schalter 6 verbunden bzw. ausgebildet, über welche die Energieversorgung der in Figur 3 dargestellten Sicherheitsschaltung gesteuert wird. Diese Sicherheitsschaltung weist einen an sich bekannten Multivibrator 8 und eine an sich bekannte Treiberbrücke 9 auf. Der Multivibrator 8 erzeugt ausgangsseitig ein Signal Q, welches über eine Leitung 10 der Treiberbrücke 9 zugeführt wird. Ferner erzeugt der Multivibrator 8 ein Signal $\bar{Q}$, welches über eine Leitung 11 der Treiberbrücke 9 zugeführt wird. Die Treiberbrücke 9 weist vier Transistoren 12, 13, 14 und 15 auf, wobei zwischen den Transistoren 14 und 15 jeweils ein Relais 16 bzw. 17 geschaltet ist. Die Leitung 10 ist an die Transistoren 12 und 15 angeschlossen, wogegen die Leitung 11 den Multivibrator 8 mit den Transistoren 13 und 14 verbindet.

Der Multivibrator 8 erzeugt zwei Rechtecksignale, die alternierend hoch oder niedrig sind, so daß entweder das Relais 16 oder das Relais 17 angesteuert wird.

Zwischen dem Schalter 6 und dem Schalter 7, welche als Taster ausgebildet sind, ist ein Startschalter 18 angeordnet, mit welchem die Treiberbrücke 9 mittelbar aktivierbar ist, wenn der Multivibrator 8 über die Leitungen 10 oder 11 ein Signal Q oder $\bar{Q}$ abgibt und die Polarität ausgangsseitig der Treiberbrücke 9 in Übereinstimmung mit dem geschlossenen Sicherheitsgitter 1 steht. Hierzu weist die Sicherheitsschaltung einen Startkondensator 19 auf, der in Reihe mit einer Diode 20 geschaltet ist und ausgangsseitig mit dem Kollektor eines Transistors 21 verbunden ist, dessen Emitter mit einer Leitung 22 verbunden ist, die am Schalter 7 anliegt. Der Transistor 21 ist als NPN-Transistor ausgebildet. Parallel zur Diode 20 sind in einer Leitung 23 ein Widerstand 24 sowie zwei Optokoppler 25 und 26 angeordnet und mit einer Leitung 27 verbunden, die in Kontakt mit dem Schalter 6 steht. Die Leitung 23 ist an ihrem dem Anschluß zu Leitung 27 gegenüberliegenden Ende zwischen der Diode 20 und dem Startkondensator 19 angeschlossen. Ferner sind parallel zur Diode 20 und zum Startkondensator 19 eine weitere Diode 28 und ein weiterer Transistor 29 geschaltet, der als PNP-Transistor ausgebildet ist und emitterseitig an die Leitung 27 sowie kollektorseitig über die Diode 28 mit einer Leitung 30 zwischen dem Startkondensator 19 und dem Transistor 21 angeschlossen ist.

In eine weitere Leitung 31, die parallel zur Leitung 30 zwischen den Leitungen 22 und 27 angeordnet ist, sind in Reihe zwei Dioden 32 und 33 sowie ein PNP-Transistor 34 geschaltet, dessen Kollektor mit der Diode 32 und dessen Emitter mit der Leitung 27 verbunden ist. Die Basis des Transistors 34 ist über eine Leitung 35 mit einer Leitung 36 verbunden, die einerseits an der Leitung 11 des Mulitvibrators 8 und andererseits an der Basis eines Transistors 37 angeschlossen ist, der als NPN-Transistor ausgebildet und emitterseitig mit der Leitung 22 verbunden ist, wogegen der Kollektor des Transistors 37 über eine Leitung 38 mit der Leitung 27 verbunden ist.

In die Leitung 35 ist ein Widerstand 39 in Reihe mit einer Diode 90 geschaltet. Die Leitung 35 ist einerseits an der Basis des Transistors 34 und andererseits an einer Leitung 58 angeschlossen. Weiterhin ist zwischen der Leitung 36 und der Leitung 35 eine Leitung 92 angeordnet, welche eine weitere Diode 91 aufweist. Die Diode 91 ist entgegengesetzt zu der Diode 90 gepolt. Ferner ist auch in der Leitung 36 ein Widerstand 40 zwischen dem Transistor 37 und dem Anschlußpunkt der Leitung 35 an die Leitung 36 angeordnet.

In die Leitung 38 ist kollektorseitig des Transistors 37 ein Kondensator 41 sowie eine Diode 42 in Reihe geschaltet, wobei zwischen der Diode 42 und der positiven Platte des Kondensators 41 eine Leitung 43 angeschlossen ist, welche die Leitung 38 mit einer Leitung 44 verbindet, in die ein Zeitkondensator 45, ein Widerstand 46, eine Diode 47, ein weiterer Widerstand 48, eine weitere Diode 49, ein Kondensator 50 sowie ein weiterer Widerstand 51 in Reihe geschaltet sind. Die Leitung 43 liegt hierbei zwischen der Diode 47 und dem Widerstand 48 an der Leitung 44 an. Zwischen der Diode 49 und dem Kondensator 50 ist in die Leitung 44 eine Leitung 52 geschaltet, die die Leitung 44 mit einem Kondensator 53 des Multivibrators 8 verbindet, der mit seiner negativen Platte mit der Leitung 27 verbunden ist. Parallel zu dem Kondensator 53 ist eine Diode 54 geschaltet.

Die Sicherheitsschaltung weist ferner eine Simulationseinrichtung 55 auf, welche einen Schalter 56 zum Auslösen der Simulationseinrichtung hat. Der Schalter 56 ist hierbei zwischen dem Kondensator 50 und dem Widerstand 51 an die Leitung 44 und an die Leitung 22 angeschlossen, wobei zwischen dem Schalter 56 und der Leitung 22 ein Widerstand 57 geschaltet ist. Zwischen dem Schalter 56 und dem Widerstand 57 ist ferner die Leitung 58 mit einem Widerstand 59 angeschlossen, die den Schalter 56 mit der Basis des Transistors 21 verbindet.

Bei dieser Sicherheitsschaltung gibt der Multivibrator 8 Signale an die Treiberbrücke 9 ab, welche unter bestimmten Bedingungen ein Durchschalten an den Verbraucher, das heißt an die nicht näher dargestellte elektrische Maschine ermöglicht. Hierzu ist der Multivibrator 8 an ein Reservoir für ein Ladungspotential angeschlossen, welches den Multivibrator 8 dann aktiv hält, wenn über ein bestimmtes Zeitintervall zumindest einer der beiden Endschalter 4, 5 nicht in seiner, das Durchschalten an den Verbraucher ermöglichenden Stellung steht. Diese Aktivphase des Multivibrators ist zeitlich begrenzt, so daß bei Überschreiten des Zeitintervalls der Multivibrator 8 deaktiviert wird und kein Signal an die Treiberbrücke 9 übermittelt.

Ein Durchschalten an den Verbraucher kann nur dann folgen, wenn die Einschaltbedingungen gegeben sind, das heißt, daß die Endschalter 4 und 5 in den erforderlichen Stellungen stehen. Hierzu wird der Startschalter 18 gedrückt, der an einen Jumper 60 angeschlossen ist, mit dem beispielsweise zwei Einschaltbedingungen vorgegeben werden können. Bleibt der Startschalter 18 beispielsweise bei einem überwachten Start geschaltet, so wird der Transistor 21 geöffnet und der Transistor 29 geschlossen. Hierdurch wird der Startkondensator 19 aufgeladen, solange der Startschalter 18 geschaltet ist. Wird nunmehr der Startschalter 18 losgelassen, wird der Transistor 21 gesperrt und der Transistor 29 geöffnet, so daß der Startkondensator 19 seine Ladung über den Widerstand 24 sowie die Optokoppler 25 und 26 abgibt, wobei sich der Startkondensator 19 über den Transistor 29 und die Diode 28 entlädt. Hierbei geben die Optokoppler 25 und 26 ein Signal ab und schließen für eine begrenzte Zeit die Treiberbrücke 9 an, welche über die Elemente 61 und 62 an die Optokoppler 25 und 26 angeschlossen ist. In diesem Fall ziehen die Relais 16 und 17 an, wobei über die Schließer 63 und 64 eine Spannungsabsenkung erfolgt und sich die Optokoppler 25 und 26 abschalten. Diese Wirkungsweise liegt vor, wenn der Jumper 60 eine Verbindung zwischen den dargestellten Positionen 1 und 3 hat, das heißt, daß der Jumper 60 einerseits an den Startschalter 18 und andererseits über einen Widerstand an die Leitung 22 sowie an der Basis des Transistors 21 angeschlossen ist.

Steht der Jumper 60 demgegenüber in einer Stellung, in welcher die Positionen 1 und 2 miteinander verbunden sind, so daß der Jumper 60 einerseits am Startschalter 18 und andererseits über einen Kondensator 66 und den Widerstand 65 mit der Leitung 22 bzw. der Basis des Transistors 21 verbunden ist, so ist die Wirkungsweise entsprechend der voranstehend genannten Wirkungsweise, jedoch handelt es sich hierbei um einen nicht überwachten Start, das heißt, daß der Start durch Schalten des Startschalters 18 ausgelöst wird. Hierbei ist die Aufladung des Kondensators 19 unabhängig von der Zeitspanne, in der der Startschalter 18 gedrückt gehalten wird.

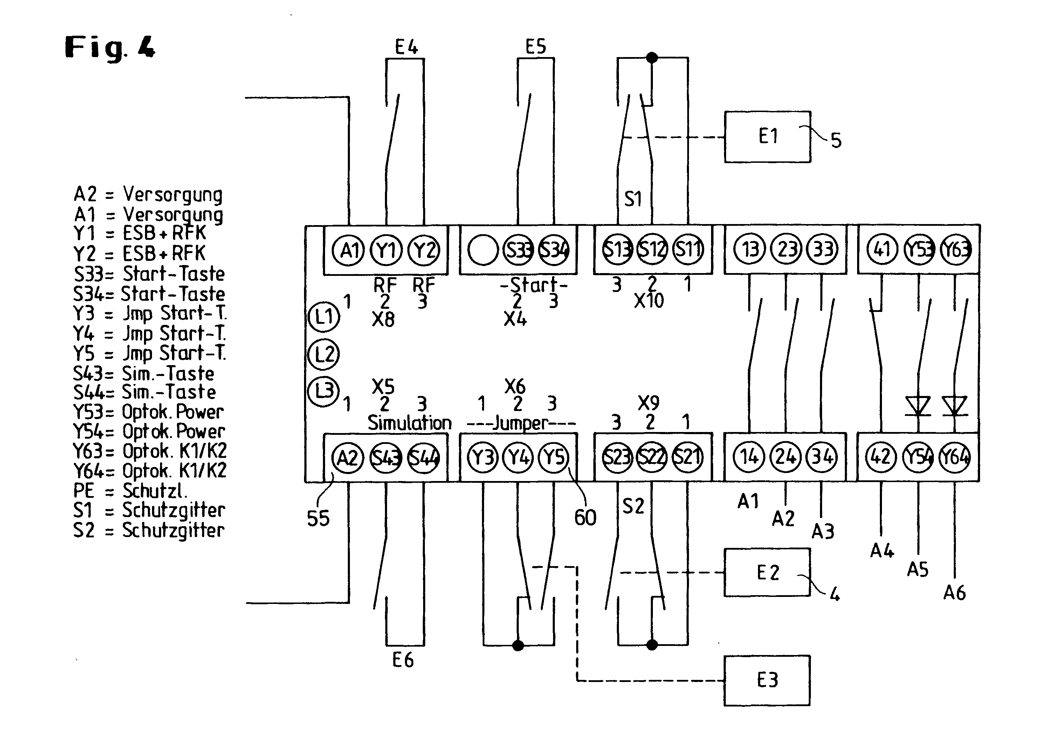

Die voranstehend beschriebene Wirkungsweise der Sicherheitsschaltung ist dann gegeben, wenn die beiden Endschalter 4 und 5 sich in einer Position befinden, in der erkennbar ist, daß das Sicherheitsgitter 1 geschlossen ist. Wird das Sicherheitsgitter aus seiner in Figur 2 dargestellten geöffneten Stellung in seine in Figur 1 dargestellte geschlossene Stellung überführt, so ist der Schaltkreis spannungslos geschaltet, bis das Sicherheitsgitter 1 seine geschlossene Position erreicht. In diesem Fall wird der Multivibrator 8 durch die Ladung des Kondensators 41 aktiv gehalten, so daß der Multivibrator 8 Signale an die Treiberbrücke 9 abgeben kann. Wird der Endschalter 4 nicht innerhalb einer bestimmten Zeit betätigt, so wird der Multivibrator 8 abgeschaltet, da die Ladung des Kondensators 41 verbraucht ist. Für den Fall, daß der Endschalter 4 innerhalb der vorgegebenen Zeit betätigt wird, wird der Kondensator 41 aufgeladen, wobei der Transistor 37 geöffnet und der Transistor 34 gesperrt ist. Anschließend wird der Transistor 37 gesperrt und der Transistor 34 geöffnet, so daß der Kondensator 41 seine Ladung an den Multivibrator 8 abgeben kann und dieser seine Signale an die Treiberbrücke 9 übermittelt. Nunmehr schwingt der Multivibrator 8, so daß über den Startschalter 18 der Befehl zum Durchschalten an den Verbraucher gegeben werden kann. Hierzu sind die beiden voranstehend beschriebenen Startmöglichkeiten, nämlich der überwachte Start bzw. der nicht überwachte Start vorgesehen. Schließlich ist in der Figur 4 noch ein Schaltbild zum Anschluß der Endschalter gemäß den Figuren 1 und 2 dargestellt.

## Patentansprüche

1. Sicherheitsschaltung zur Überwachung eines zwischen zwei Endstellungen bewegbaren Gegenstandes, beispielsweise einer verschiebbaren Sicherheitstür (1) einer elektrischen Maschine, mit zumindest zwei Endschaltern (4, 5), welche die Endpositionen des Gegenstandes überwachen, **gekennzeichnet durch** zumindest einen Schalter (18) zur Aktivierung eines ersten Reservoirs für ein erstes Ladungspotential und einen Oszillator, insbesondere einem Multivibrator (8), der an eine an sich bekannte Treiberbrücke (9) mit Relaisausgängen angeschlossen ist, welche an einen Verbraucher, beispielsweise eine elektrische Maschine angeschlossen ist, wobei der Oszillator mit einem zweiten Reservoir für ein zweites Ladungspotential verbunden ist, welches den Oszillator über ein vorbestimmtes Zeitintervall aktiviert hält, wenn die Endschalter (4, 5) sich in nicht geschalteter Position befinden.

2. Sicherheitsschaltung nach Anspruch 1, **dadurch gekennzeichnet,** **daß** das zweite Reservoir als Kondensator, insbesondere bipolarer Zeitkondensator (45) mit zumindest zwei Elektrolytkondensatoren ausgebildet ist.

3. Sicherheitsschaltung nach Anspruch 1, **dadurch gekennzeichnet,** **daß** das erste Reservoir einen Startkondensator (19) aufweist, der über den insbesondere als Taster ausgebildeten Schalter (18) derart aufladbar ist, daß er ein Signal an die Treiberbrücke (9) abgibt, wenn einerseits der Oszillator aktiviert ist und andererseits gegebenenfalls externe Einschaltbedingungen vorliegen.

**4.** Sicherheitsschaltung nach Anspruch 3, **dadurch gekennzeichnet,** **daß** dem Startkondensator (19) zumindest ein, vorzugsweise zwei Optokoppler (25, 26) nachgeschaltet ist bzw. sind, welche vorzugsweise als Leuchtdioden ausgebildet und ausgangsseitig mit der Treiberbrücke (9) verbunden sind, so daß die Optokoppler (25, 26) die Treiberbrücke (9) zumindest über ein Zeitintervall mit erforderlicher Polarität ausgangsseitig schalten.

**5.** Sicherheitsschaltung nach Anspruch 3, **dadurch gekennzeichnet,** **daß** der Startkondensator (19) seitens seiner negativen Platte an zwei Transistoren (21, 29) angeschlossen ist, die wechselseitig schaltbar sind, so daß ein Laden und Entladen des Startkondensators (19) erfolgt.

**6.** Sicherheitsschaltung nach Anspruch 3, **dadurch gekennzeichnet,** **daß** das Laden und Entladen des Startkondensators (19) über die Stellung des Tasters (18) steuerbar ist, wobei insbesondere bei geschlossenem Taster (18) der Startkondensator (19) aufgeladen und bei anschließend geöffnetem Taster (18) der Startkondensator (19) entladen wird.

**7.** Sicherheitsschaltung nach Anspruch 3, **dadurch gekennzeichnet,** **daß** der Startkondensator (19) über eine Schaltung aus zwei polarisierfreien Kondensatoren (66) und einer Diode bei geschlossenem oder geöffnetem Taster (18) automatisch aufladbar und anschließend entladbar ist.

**8.** Sicherheitsschaltung nach Anspruch 6 und Anspruch 7, **dadurch gekennzeichnet,** **daß** eine insbesondere als Jumper (60) ausgebildete Schalteinrichtung vorgesehen ist, mit welcher das Laden und Entladen des Startkondensators (19) in Abhängigkeit der Stellung des Tasters (18) oder automatisch nach Schließen oder Öffnen des Tasters (18) steuerbar ist.

**9.** Sicherheitsschaltung nach Anspruch 1, **dadurch gekennzeichnet,** **daß** der Oszillator an ein Ladungsreservoir angeschlossen ist, welches zumindest einen Kondensator (41) aufweist, der mit zumindest zwei Transistoren (34, 37) verbunden ist, welche wechselseitig schaltbar sind, so daß wechselseitig ein Lade- und Entladevorgang des Kondensators (41) erfolgt, wobei der Kondensator (41) beim Entladevorgang seine Ladung an den Oszillator abgibt.

**10.** Sicherheitsschaltung nach Anspruch 1, **dadurch gekennzeichnet,** **daß** der Oszillator Rechtecksignale erzeugt.

**11.** Sicherheitsschaltung nach Anspruch 1, **dadurch gekennzeichnet,** **daß** dem Oszillator eine Simulationseinrichtung (56) zugeordnet ist, welche bei Inbetriebnahme die Stellung des Gegenstandes (1) überwacht und bei Betätigung an den Oszillator meldet, bevor über den Schalter (18) das erste Reservoir für das erste Ladungspotential aktiviert wird.

**12.** Sicherheitsschaltung nach Anspruch 1, **dadurch gekennzeichnet,** **daß** bei Betätigung nur eines Endschalters (4, 5) die Schaltung spannungslos geschaltet wird.

**13.** Sicherheitsschaltung nach Anspruch 1, **dadurch gekennzeichnet,** **daß** der Oszillator zu seiner Energieversorgung in einen geschlossenen Regelkreis geschaltet ist.

**Claims**

**1.** A safety circuit for monitoring a mobile object between two end positions, for example, a slidable safety door (1) of an electrical machine, with at least two end switches (4, 5), which monitor the end positions of the object, **characterized by** at least one switch (18) for activating a first reservoir for a first charge potential and an oscillator, in particular a multivibrator (8), which is connected to a driver bridge (9) known *per se*, with relay outputs, which is connected to a power consuming device, for example an electrical machine, wherein the oscillator is connected with a second reservoir for a second charge potential, which maintains the oscillator enabled over a predetermined time interval, when the end switches (4, 5) are in the disconnected position.

**2.** The safety circuit according to claim 1, **characterized in that** the second reservoir is formed as a condenser, in particular a bipolar timing condenser (45) with at least two electrolytic condensers.

**3.** The safety circuit according to claim 1, **characterized in that** the first reservoir comprises a start condenser (19), which may be charged through the switch, in particular formed as a button switch, so that it delivers a signal to the driver bridge (9) when the oscillator is enabled on the one hand and if necessary, when external triggering conditions exist on the other hand.

**4.** The safety circuit according to claim 3, **characterized in that** at least one, preferably two optocouplers (25, 26) are mounted downstream from the start condenser (19), which are preferably formed as light emitting diodes and connected on the output side with the driver bridge (9), so that the optocouplers (25, 26) connect on the output side to the driver bridge (9) at least over a time interval with the required polarity.

**5.** The safety circuit according to claim 3, **characterized in that** the start condenser (19) is connected to two transistors (21, 29) on the side of its negative plate, which may be switched alternately, so that a charge and discharge of the start condenser (19) occurs.

**6.** The safety circuit according to claim 3, **characterized in that** the charge and discharge of the start condenser (19) is controllable through the position of the button switch (18), wherein in particular the start condenser (19) is charged when the button switch (18) is closed and the start condenser is discharged when the button switch (18) is subsequently open.

**7.** The safety circuit according to claim 3, **characterized in that** the start condenser (19) may automatically be charged and subsequently discharged through a circuit of two unbiased condensers (66) and a diode when switch button (18) is closed or open.

**8.** The safety circuit according to claim 6 and claim 7, **characterized in that** a switching device, in particular formed as a jumper (60), is provided, with which the charge and discharge of the start condenser (19) is controllable in dependence of the position of the button switch (18) or automatically after closing or opening the button switch (18).

**9.** The safety circuit according to claim 1, **characterized in that** the oscillator is connected to a charge reservoir, which comprises at least one condenser (41) which is connected with at least two transistors (34, 37), which may be switched on alternately so that a charging and discharging process of the condenser (41) occurs alternately, wherein the condenser (41) delivers its charge to the oscillator during the discharging process.

**10.** The safety circuit according to claim 1, **characterized in that** the oscillator produces square wave signals.

**11.** The safety circuit according to claim 1, **characterized in that** a simulation device (56) is associated with the oscillator, which monitors the position of the object (1) and upon actuation reports it to the oscillator, before the first reservoir is enabled for the first charge potential through the switch (18).

**12.** The safety circuit according to claim 1, **characterized in that** upon actuation of only one end switch (4, 5) the circuit is deenergized.

**13.** The safety circuit according to claim 1, **characterized in that** the oscillator is connected to its power supply in a closed-loop control.

**Revendications**

**1.** Circuit de sécurité pour la surveillance d'un objet pouvant être déplacé entre deux positions de fin de course, par exemple une porte de sécurité coulissante (1) d'une machine électrique, avec au moins deux interrupteurs de fin de course (4, 5) qui surveillent les positions de fin de course de l'objet, **caractérisé en ce qu'**il existe au moins un interrupteur (18) pour l'activation d'un premier réservoir pour un premier potentiel de chargement et un oscillateur, en particulier un multivibrateur (8), qui est raccordé à un shunt d'excitation (9) en soi connu avec des sorties de relais qui est relié à un consommateur, par exemple une machine électrique, l'oscillateur étant relié à un deuxième réservoir pour un deuxième potentiel de chargement qui maintient l'oscillateur en état d'activation durant un intervalle de temps prédéterminé, si les interrupteurs de fin de course (4, 5) se trouvent dans une position non actionnée.

**2.** Circuit de sécurité selon la revendication 1, **caractérisé en ce que** le deuxième réservoir est conçu comme condensateur, en particulier comme condensateur temporisé bipolaire (45) avec au moins deux condensateurs électrolytiques.

**3.** Circuit de sécurité selon la revendication 1, **caractérisé en ce que** le premier réservoir est muni d'un condensateur de démarrage (19), qui peut être chargé de telle manière au moyen de l'interrupteur (18) conçu en particulier comme bouton-poussoir qu'il remet un signal au shunt d'excitation (9), si d'une part l'oscillateur est activé et si d'autre part des conditions externes de mise en marche existent éventuellement.

**4.** Circuit de sécurité selon la revendication 3, **caractérisé en ce que** le condensateur de démarrage (19) est suivi d'au moins un, de préférence deux, optocoupleur(s) (25, 26), qui est(sont) de préférence conçu(s) comme diode(s) électroluminescente(s) et dont la sortie est reliée au shunt d'excitation (9), les optocoupleurs (25, 26) appliquant, au moins pendant un intervalle de temps, la polarité nécessaire à la sortie du shunt d'excitation (9).

**5.** Circuit de sécurité selon la revendication 3, **caractérisé en ce que** la plaque négative du condensateur de démarrage (19) est raccordée à deux transistors (21, 29) qui sont commutables alternativement, un chargement et un déchargement du condensateur de démarrage (19) ayant lieu.

**6.** Circuit de sécurité selon la revendication 3, **caractérisé en ce que** le chargement et le déchargement du condensateur de démarrage (19) peuvent être pilotés par la position du bouton-poussoir (18), le chargement du condensateur de démarrage (19) ayant lieu en particulier lorsque le bouton-poussoir (18) est fermé et le déchargement de ce même condensateur de démarrage (19) ayant lieu lorsque le bouton-poussoir (18) est ensuite ouvert.

**7.** Circuit de sécurité selon la revendication 3, **caractérisé en ce que**, le bouton-poussoir (18) étant fermé ou ouvert, le condensateur de démarrage (19) peut être chargé automatiquement puis ensuite déchargé par l'intermédiaire d'un circuit se composant de deux condensateurs sans polarisation (66) et d'une diode.

**8.** Circuit de sécurité selon la revendication 6 et la revendication 7, **caractérisé en ce qu'**il est prévu un dispositif de commutation conçu en particulier comme interrupteur à bascule (60) avec lequel il est possible de piloter le chargement et le déchargement du condensateur de démarrage (19) en fonction de la position du bouton-poussoir (18) ou automatiquement après la fermeture ou l'ouverture du bouton-poussoir (18).

**9.** Circuit de sécurité selon la revendication 1, **caractérisé en ce que** l'oscillateur est raccordé à un réservoir de chargement qui comprend au moins un condensateur (41), qui est relié à au moins deux transistors (34, 37), qui peuvent être commutés alternativement, de manière à ce qu'un processus de chargement et de déchargement du condensateur (41) ait lieu alternativement, le condensateur (41) transmettant sa charge à l'oscillateur lors du processus de déchargement.

**10.** Circuit de sécurité selon la revendication 1, **caractérisé en ce que** l'oscillateur produit des signaux rectangulaires.

**11.** Circuit de sécurité selon la revendication 1, **caractérisé en ce qu'**à l'oscillateur est attribué un dispositif de simulation (56) qui, lors de la mise en marche, surveille la position de l'objet (1) et, en cas d'actionnement, la communique à l'oscillateur avant que le premier réservoir pour le premier potentiel de chargement ne soit activé par l'intermédiaire de l'interrupteur (18).

**12.** Circuit de sécurité selon la revendication 1, **caractérisé en ce que** le circuit est mis hors tension en cas d'actionnement de seulement un interrupteur de fin de course (4, 5).

**13.** Circuit de sécurité selon la revendication 1, **caractérisé en ce que** pour son alimentation électrique, l'oscillateur est incorporé dans un circuit de régulation fermé.

# Fig. 1

# Fig. 2

Fig. 3

EP 0 890 058 B1

10

**Fig. 4**

A2 = Versorgung
A1 = Versorgung
Y1 = ESB+RFK
Y2 = ESB+RFK
S33= Start-Taste
S34= Start-Taste
Y3 = Jmp Start-T.
Y4 = Jmp Start-T.
Y5 = Jmp Start-T.
S43= Sim.-Taste
S44= Sim.-Taste
Y53= Optok. Power
Y54= Optok. Power
Y63= Optok. K1/K2
Y64= Optok. K1/K2
PE = Schutzl.
S1 = Schutzgitter
S2 = Schutzgitter